# EUROPEAN PATENT APPLICATION

(11) **EP 4 815 433 A1**
(43) Date of publication of application: **30.09.2026**
(21) Application number: 24892685.9
(22) Date of filing: 30.04.2024
(51) Int. Cl.: H04N 7/15

(54) **COLOR CAST CORRECTION METHOD AND APPARATUS FOR VIDEO CONFERENCING DEVICE, DEVICE, AND STORAGE MEDIUM**

(30) Priority: 24.11.2023 CN 202311587213
(71) Applicant: Zhejiang Uniview Technologies Co., Ltd., Hangzhou, Zhejiang 310051 (CN)
(72) Inventor: DING, Yong, Hangzhou, Zhejiang 310051 (CN)
(74) Representative: De Ros, Alberto
(86) International application number: PCT/CN2024/090916
(87) International publication number: WO 2025/107519

(57) **Abstract**

The present invention relates to the technical field of image processing, and provides a color cast correction method and apparatus for a video conferencing device, a device, and a storage medium. The method comprises: acquiring a lamp bead working current corresponding to a video conferencing device and the pixel size of at least one image (110); on the basis of each pixel size, determining a target distance between a target user and the video conferencing device (120); on the basis of the lamp bead working current, the target distance, and a color cast value under the target distance, determining a color deviation degree corresponding to the color cast value under the target distance (130), wherein the color cast value is an RGB value corresponding to a camera module on the video conferencing device; and on the basis of the color deviation degree and the color cast value, determining a target correction RGB we value corresponding to the camera module (140), wherein the target correction RGB value is used for performing color compensation when the camera module collects statistics about automatic white balance information.

## Description

### CROSS-REFERENCES TO RELATED APPLICATIONS

The present application claims priority to the Chinese patent application No. 2023115872134 filed on November 24, 2023, entitled "Color Cast Correction Method and Apparatus For Video Conferencing Device, Device, and Storage medium", which is incorporated herein by reference in its entirety.

### FIELD

The present application relates to the field of image processing, and in particular to a method and an apparatus for correcting color cast of a video conference device, a device and a storage medium.

### BACKGROUND

As one of the main functions of a video conference device, video conferencing is used with increasing frequency. In practical use, when participants are close to the video conference device, the color of the face images displayed in the video conference device exhibits a color cast; however, when the participants are far from the video conference device, the color of the face images in the video conference device returns to normal.

In the related art, an image effect is generally judged subjectively by a user, and an adjustment is made by directly modifying RGB (red, green, blue) channel values of the video conference device. However, directly modifying the RGB channel values of the video conference device cannot ensure the image effect of each face image within a close distance, and simultaneously causes a color cast phenomenon in face images at medium and long distances, resulting in a poor overall image effect of the video conference device.

### BRIEF SUMMARY

The present application provides a method and an apparatus for correcting color cast of a video conference device, a device and a storage medium, so as to solve the defect in the related art that a color cast occurs when being close to the video conference device, implement adaptive compensation of RGB (red, green, blue) values of a camera module, and improve the overall image effect of the video conference device.

A method for correcting color cast of a video conference device is provided according to the present application, including:
obtaining an operating current of lamp beads corresponding to the video conference device and a pixel size of at least one image;
determining a target distance between a target user and the video conference device based on each pixel size;
determining a color deviation degree corresponding to a color cast value at the target distance based on the operating current of the lamp beads, the target distance, and the color cast value at the target distance, where the color cast value is an RGB value corresponding to a camera module on the video conference device; and
determining a target corrected RGB value corresponding to the camera module based on the color deviation degree and the color cast value, where the target corrected RGB value is used for performing color compensation in case that the camera module collects statistics about automatic white balance (AWB) information.

An apparatus for correcting color cast of a video conference device is also provided according to the present application, including:
an obtaining module, configured to obtain an operating current of lamp beads corresponding to the video conference device and a pixel size of at least one image;
a first determining module, configured to determine a target distance between a target user and the video conference device based on each pixel size;
a second determining module, configured to determine a color deviation degree corresponding to a color cast value at the target distance based on the operating current of the lamp beads, the target distance, and the color cast value at the target distance, where the color cast value is an RGB value corresponding to a camera module on the video conference device; and
a color cast correcting module, configured to determine a target corrected RGB value corresponding to the camera module based on the color deviation degree and the color cast value, where the target corrected RGB value is used for performing color compensation in case that the camera module collects statistics about automatic white balance (AWB) information.

An electronic device is also provided according to the present application, including a memory, a processor, and a computer program stored in the memory and executed in the processor, where the processor implements any of methods for correcting color cast of a video conference device described above when executing the computer program.

A computer-readable storage medium is also provided according to the present application, storing a computer program, and the computer program implements any of methods for correcting color cast of a video conference device described above when executed by a processor.

### BRIEF DESCRIPTION OF THE DRAWINGS

FIG. 1 is a schematic flowchart of a method for correcting color cast of a video conference device according to an embodiment of the present application;
FIG. 2 is a schematic diagram of determining a target distance according to an embodiment of the present application;
FIG. 3 is an exemplary schematic diagram of a device coordinate system according to an embodiment of the present application;
FIG. 4 is a schematic structural diagram of an apparatus for correcting color cast of a video conference device according to an embodiment of the present application; and
FIG. 5 is a schematic structural diagram of an electronic device according to an embodiment of the present application.

### DETAILED DESCRIPTION

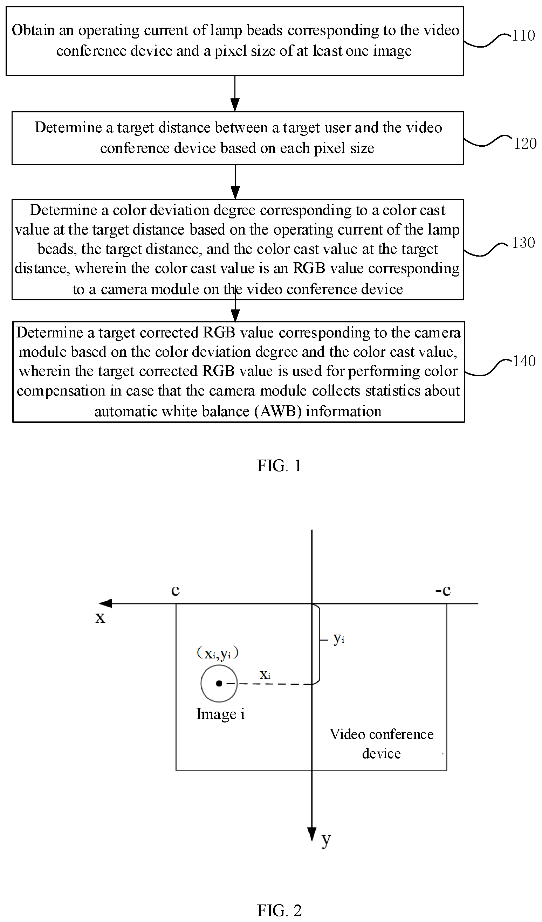

To address the problem in the related art that a color cast occurs when being close to the video conference device, the present application provides a method for correcting color cast of a video conference device. FIG. 1 is a schematic flowchart of a method for correcting color cast of a video conference device according to an embodiment of the present application. As shown in FIG. 1, the method includes:

Step 110: Obtain an operating current of lamp beads corresponding to the video conference device and a pixel size of at least one image.

In an embodiment, when a user is close to the video conference device, the color of an image displayed in the video conference device exhibits a color cast; however, when the user is far from the video conference device, the color of the image in the video conference device returns to normal. By obtaining the pixel size of the image corresponding to the user, a distance between the user and the video conference device is further determined, and according to the distance, it is judged whether the image corresponding to the user in the video conference device exhibits a color cast phenomenon. In addition, a backlight color of the video conference device is controlled and adjusted by the operating current of LED lamp beads in a device screen, and different operating currents of the lamp beads correspond to different backlight colors. When the user is close to the video conference device, statistics about automatic white balance (AWB) information collected by the camera module is interfered with by the backlight color of the video conference device, leading to a color temperature calculation error, which in turn causes the color of the image displayed in the video conference device to exhibit a color cast. After the user moves away from the video conference device by a certain distance, the influence of the backlight color on the color temperature calculation in the camera module is reduced, so that the color of the image displayed in the video conference device returns to normal. In the embodiment of the present application, it is also required to obtain the operating current of the lamp beads in the video conference device, and combine the judgment of the distance and the interference of the backlight color caused by the operating current of the lamp beads to solve the color cast problem when the user is close to the video conference device.

It should be noted that the camera module captures each user through a camera to generate corresponding scene image data. After processing such as face detection and recognition is performed on the scene image data, a face pixel position of each face image is determined, and the processed scene image data is sent to the video conference device for display. The above image is a face image corresponding to each user in the processed scene image data. In addition, the above pixel size can be understood as the face pixel position of the face image corresponding to each user in the scene image data in the camera module, and the face pixel position includes horizontal pixels and vertical pixels of the face image in the scene image data. According to a proportional relationship between the pixel size and a sensor size in the camera module, a distance from the user to the camera module can be determined, and then according to the distance from the user to the camera module, the distance from the user to the video conference device is determined. The sensor size in the camera module is identical to the pixel size of the above scene image data.

In an embodiment, the video conference device may be a display that is communicatively connected to the camera module and capable of displaying the scene image data sent by the camera module. For example, the video conference device may be a large conference screen with a screen size of 55 inches or greater than 55 inches.

Step 120: Determine a target distance between a target user and the video conference device based on each said pixel size.

In an embodiment, for the pixel size of the image corresponding to each user, a distance of each user from the video conference device can be determined based on the pixel size. Different distances correspond to different color deviation degrees of the images corresponding to each user. Therefore, a distance with the highest color deviation degree is determined from all distances as the target distance, and a user corresponding to the target distance is taken as the target user; that is, in the video conference device, a target image corresponding to the target user has the highest color deviation degree.

In an embodiment, determining the target distance between the target user and the video conference device based on each pixel size includes:
obtaining a sensor pixel size corresponding to the camera module, a lens focal length, and center coordinates of each image in the video conference device;
for each pixel size, determining a first distance between a user corresponding to the pixel size and the camera module based on the sensor pixel size, the lens focal length, and the pixel size;
determining a third distance between the image and the camera module based on a second distance from the camera module to the video conference device and the center coordinates;
determining a fourth distance between the user and the video conference device based on the first distance and the third distance; and
determining the target distance between the target user and the video conference device based on each fourth distance.

In an embodiment, before determining the target distance, it is required to construct a device coordinate system corresponding to the video conference device, and then determine center coordinates of each image in the device coordinate system. For example, FIG. 2 is a schematic diagram of determining a target distance according to an embodiment of the present application. As shown in FIG. 2, a side length of the video conference device is 2c. Taking a midpoint of an upper edge of the video conference device as an origin, an x-axis of the device coordinate system is constructed along a horizontal direction where the upper edge is located, and a y-axis of the device coordinate system is constructed from the origin along a vertical direction perpendicular to the x-axis. Center coordinates (xi, yi) represent coordinates of a midpoint of an image i in the device coordinate system, where i represents the i-th image in the video conference device, and i is an integer greater than or equal to 1. In addition, the origin of the device coordinate system may also be located at the center, four corners, or any arbitrary position of the video conference device.

After obtaining the sensor pixel size corresponding to the camera module, the lens focal length, and the center coordinates of each image in the video conference device, for the i-th image, by using formula (1), a first distance between a user i corresponding to the pixel size and the video conference device can be calculated based on the sensor pixel size in the camera module, the lens focal length, and the pixel size of the i-th image, where formula (1) is: $OL = FL ∗ \frac{{FOV}_{l}}{M} = FL ∗ \frac{{FOV}_{w}}{N}$ where *OL* represents the first distance from the user i to a center point of the camera module, *FL* represents the lens focal length, *M* represents a number of pixels in a horizontal direction of the sensor pixel size in the camera module, *N* represents a number of pixels in a vertical direction of the sensor pixel size in the camera module, the sensor pixel size is represented as M*N, *FOVₗ* represents horizontal pixels in the pixel size corresponding to the i-th image, *FOV_{w}* represents vertical pixels in the pixel size corresponding to the i-th image, *l* represents the horizontal direction, and *w* represents the vertical direction.

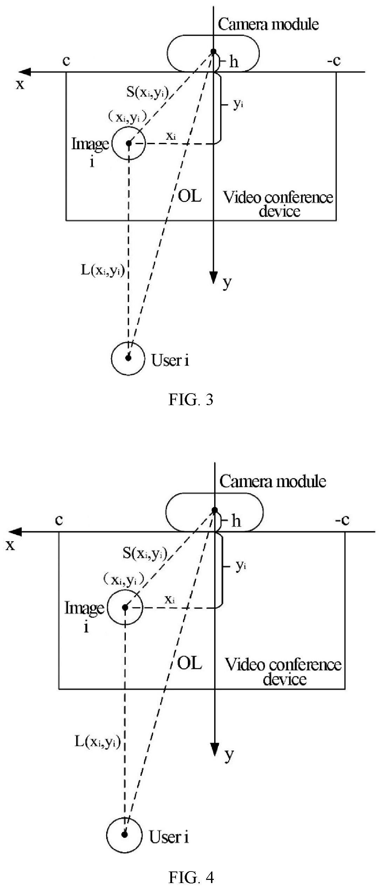

FIG. 3 is an exemplary schematic diagram of a device coordinate system according to an embodiment of the present application. As shown in FIG. 3, the camera module is disposed above the video conference device and is disposed coaxially with the video conference device. After determining the first distance, a height difference in a y-axis direction between the center point of the camera module and the center coordinates of the image i can be determined according to a sum of the second distance from the center point of the camera module to the midpoint of the upper edge of the video conference device and a y-axis coordinate of the center coordinates of the image i. According to the Pythagorean theorem, by using formula (2), a third distance between the center coordinates of the image i and the center point of the camera module can be calculated, where formula (2) is: $S \left({x}_{i}, {y}_{i}\right) = \sqrt{{x}_{i}^{2} + {\left({y}_{i}+h\right)}^{2}}$ where *S*(*xᵢ*, *yᵢ*) represents the third distance between the center coordinates of the image i and the center point of the camera module, *h* represents the second distance from the center point of the camera module to the midpoint of the upper edge of the video conference device, and *yᵢ* + *h* represents the height difference in the y-axis direction between the center point of the camera module and the center coordinates of the image i.

After determining the first distance and the third distance, according to the Pythagorean theorem, by using formula (3), a fourth distance between the user i and the video conference device can be calculated, that is, a fourth distance between the user i and the center coordinates of the image i, where formula (3) is: $L \left({x}_{i}, {y}_{i}\right) = \sqrt{{OL}^{2} - S {\left({x}_{i}, {y}_{i}\right)}^{2}}$ where *L*(*xᵢ, yᵢ*) represents the fourth distance between the user i and the video conference device.

After determining the fourth distance between each user and the video conference device, the target distance can be determined from all the fourth distances.

In an embodiment, determining the target distance between the target user and the video conference device based on each fourth distance includes:
in case that a quantity of the fourth distances is greater than 1, determining a user corresponding to a minimum fourth distance as the target user, and determining the minimum fourth distance as the target distance from the target user to the video conference device; and
in case that a quantity of the fourth distances is equal to 1, determining a user corresponding to the fourth distance as the target user, and determining the fourth distance as the target distance from the target user to the video conference device.

In an embodiment, if there is only one user within a shooting range of the camera module, the user is determined as the target user, and the fourth distance between the user and the video conference device is determined as the target distance between the target user and the video conference device. If there are multiple users within the shooting range of the camera module, the fourth distance between each user and the video conference device can be calculated. Since the closer a user is to the video conference device, the higher the color deviation degree of the image corresponding to the user is. A user corresponding to a minimum fourth distance is determined as the target user from the multiple fourth distances, and the minimum fourth distance is determined as the target distance from the target user to the video conference device. At this time, since the target distance is the minimum, the target image corresponding to the target user accounts for a maximum proportion in a fully displayed image of the video conference device, and the target image has the highest color deviation degree. After correcting the fully displayed image of the video conference device based on the color deviation degree of the target image, there is a slight over-correction for the color deviation degree of images corresponding to other users. Since the images corresponding to other users account for a relatively small proportion in the fully displayed image, they have a minor and negligible impact on the overall image effect of the video conference device. That is, after correcting the color cast of the target image, the overall image effect of the video conference device can be improved.

Step 130: Determine a color deviation degree corresponding to the color cast value at the target distance based on the operating current of the lamp beads, the target distance, and the color cast value at the target distance, where the color cast value is an RGB value corresponding to a camera module on the video conference device.

In an embodiment, after determining the target distance and the color cast value at the target distance, the color deviation degree corresponding to the color cast value can be determined in combination with the target distance and the interference of the backlight color caused by the operating current of the lamp beads, to correct the color cast value based on the color deviation degree and improve the overall image effect of the video conference device.

In an embodiment, determining the color deviation degree based on the operating current of the lamp beads, the target distance, and the color cast value at the target distance includes:
determining a first RGB value of the video conference device at the operating current of the lamp beads;
determining a target color influence value of the video conference device on the target user based on the first RGB value and the target distance; and
determining the color deviation degree corresponding to the color cast value at the target distance based on the target color influence value, the target distance, and the color cast value

In an embodiment, adjusting different operating currents of the lamp beads in the video conference device causes the RGB values of the image in the video conference device to change, where a change in the operating current of the lamp beads mainly affects a component value of a B channel in the RGB values. An increase in the component value of the B channel causes a decrease in color coordinates (*w_{xᵢ}*, *w_{yᵢ}*), thereby leading to an increase in color temperature, and an finally formed RGB value biases toward blue. A correspondence between the operating current of the lamp beads and the color coordinates is *G*ᵢₙ(*Iₐ*) = *K* ∗ *G*ₒᵤₜ(*w_{xᵢ}*,*w_{yᵢ}*), where *G*ᵢₙ(*Iₐ*) represents an implicit function when the operating current of the lamp beads is *Iₐ*, *G*ₒᵤₜ(*w_{xᵢ}*,*w_{yᵢ}*) represents an implicit function when the color coordinates are (*w_{xᵢ}*, *w_{yᵢ}*), and K represents an influence coefficient of the operating current of the lamp beads on the color coordinates. After determining the correspondence between the operating current of the lamp beads and the color coordinates, according to a conversion relationship between the color coordinates and the component values of each channel in the RGB values as shown in formula (4), the first RGB value of the video conference device at the operating current of the lamp beads can be determined, where formula (4) is: $\left\{\begin{matrix}{R}_{1} = \frac{{w}_{{x}_{i}}}{{w}_{{y}_{i}}} ∗ 1.612 - \frac{{w}_{{y}_{i}}}{0.42} \\ {G}_{1} = \frac{{w}_{{y}_{i}}}{0.67} ∗ 1.0 - 0.514 ∗ R - \frac{{w}_{{y}_{i}}}{0.42} \\ {B}_{1} = {w}_{{y}_{i}} ∗ \frac{\left(2.25-\frac{{w}_{{x}_{i}}}{{w}_{{y}_{i}}}\right)}{0.67}\end{matrix}\right.$ where *R*₁ represents a component value of an R channel in the first RGB value, *G*₁ represents a component value of a G channel in the first RGB value, *B*₁ represents a component value of a B channel in the first RGB value, and the first RGB value can be represented as *T*₁(*R*₁*, G*₁, *B*₁)*.*

After the first RGB value is determined, a target color influence value of the backlight color of the video conference device at the target distance on the camera module when determining the RGB value can be determined based on the target distance and the first RGB value. Thereafter, a color deviation degree corresponding to the color cast value at the target distance is calculated based on the target color influence value, the target distance, and the color cast value, to correct the color cast value based on the color deviation degree.

In an embodiment, determining the target color influence value of the video conference device on the target user based on the first RGB value and the target distance includes:
determining a target region of a target image corresponding to the target user in the video conference device;
determining a first color influence value of the video conference device on the target user in a horizontal direction based on the first RGB value, a first weight corresponding to the target region, and a second weight corresponding to other regions besides the target region in the video conference device, where the horizontal direction is a direction parallel to a display screen of the video conference device, i.e., the x-axis direction shown in FIG. 2 or FIG. 3; and
determining the target color influence value of the video conference device on the target user based on a preset attenuation ratio, the target distance, and the first color influence value.

In an embodiment, before the target color influence value is determined, a display region of the video conference device may be divided along the x-axis direction shown in FIG. 2 or FIG. 3, to determine a weight of each divided region block influencing the target image, where a sum of the weights of the region blocks influencing the target image is 1. For example, taking a number of the region blocks obtained after the division of the display region of the video conference device being N as an example, where N is an integer greater than or equal to 2, the target region where the target image is located is determined according to an x-axis coordinate among center coordinates corresponding to the target image, and then a first weight *q* of the target region influencing the target image is determined, where the first weight *q* is a preset value. When the second weight corresponding to other regions besides the target region is determined, a closer distance between the other regions and the target region indicates a larger value of the second weight corresponding to the other regions, that is, values of the second weights on both sides of the target region sequentially decrease.

The target region where the target image is located is determined according to the x-axis coordinate among the center coordinates corresponding to the target image, and the first weight of the target region influencing the target image and the second weight of other regions besides the target region influencing the target image are determined. By using formula (5), the first color influence value of the video conference device on the target user can be determined in the horizontal direction, that is, in the x-axis direction shown in FIG. 2 or FIG. 3, according to a weighted sum of each region block and the first RGB value, where formula (5) is: $W \left({x}_{i}\right) = {\sum }_{{x}_{d} = - c}^{c} U \left({x}_{i}\right) {T}_{1} \left({R}_{1}, {G}_{1}, {B}_{1}\right)$ where *W*(*xᵢ*) represents the first color influence value of the video conference device on the target user, [-*c*, *c*] represents a value range of the x-axis coordinate, that is, the range of the x-axis in the device coordinate system, *U*(*xᵢ*) represents the first weight or the second weight, and each region block is traversed; if a current region block is the target region corresponding to the target image, *U*(*xᵢ*) represents the first weight, and if the current region block is another region besides the target region, *U*(*xᵢ*) represents the second weight; and *x_{d}* represents a current x-axis coordinate traversed.

After the first color influence value is determined, by using formula (6), an influence of the operating current *Iₐ* of the lamp beads on the backlight color of the video conference device is determined along a z-axis direction perpendicular to the video conference device shown in FIG. 2 or FIG. 3 based on the preset attenuation ratio, the target distance, and the first color influence value, determining the target color influence value of the backlight color of the video conference device on the target user; that is, the target color influence value of the video conference device on the camera module calculating the RGB value is determined on a plane formed by the z-axis direction where the target distance is located and the x-axis direction, where formula (6) is: ${T}_{2} \left({R}_{2}, {G}_{2}, {B}_{2}\right) = \frac{L \left({x}_{i}, {y}_{i}\right)}{t} ∗ W \left({x}_{i}\right)$ where *T*₂(*R*₂, *G*₂, *B*₂) represents the target color influence value of the video conference device on the target user, *t* represents the preset attenuation ratio of the first RGB value on the influence of the video conference device at the operating current of the lamp beadsand the RGB value calculated at the target distance *L*(*xᵢ, yᵢ*) on the camera module , and *W*(*xᵢ*) represents the first color influence value of the video conference device on the target user.

In an embodiment, determining the color deviation degree corresponding to the color cast value at the target distance based on the target color influence value, the target distance, and the color cast value includes:
obtaining a preset distance threshold and a preset color threshold corresponding to the camera module at the preset distance threshold;
in case that the target distance is less than the preset distance threshold, determining the color deviation degree corresponding to the color cast value at the target distance based on the preset distance threshold, the preset color threshold, the color cast value, the target distance, and the target color influence value; and
in case that the target distance is greater than or equal to the preset distance threshold, determining the color deviation degree corresponding to the color cast value at the target distance to be 1.

In an embodiment, after the target color influence value is determined, the preset distance threshold and the preset color threshold at the preset distance threshold may be obtained. The preset distance threshold is a distance determined through multiple tests at which an image corresponding to a user in the video conference device has no obvious color cast; that is, when a distance between the user and the video conference device is greater than or equal to the preset distance threshold, the image corresponding to the user has no obvious color cast, whereas when the distance between the user and the video conference device is less than the preset distance threshold, the image corresponding to the user has an obvious color cast. Meanwhile, the preset color threshold corresponding to the camera module at the preset distance threshold is read. At this time, a correspondence as shown in formula (7) exists among the preset distance threshold, the preset color threshold corresponding to the preset distance threshold, the target distance, the color cast value corresponding to the target distance, and the target color influence value, where formula (7) is: $\frac{{L}_{0}}{{T}_{0} \left({R}_{0}, {G}_{0}, {B}_{0}\right)} = {P}_{T ′} \left(L\left({x}_{i}, {y}_{i}\right),{I}_{a}\right) ∗ \frac{L \left({x}_{i}, {y}_{i}\right)}{{T}^{′} \left({R}^{′}, {G}^{′}, {B}^{′}\right) - {T}_{2} \left({R}_{2}, {G}_{2}, {B}_{2}\right)}$ where *L*₀ represents the preset distance threshold, *T*₀*(R*₀*, G*₀, *B*₀) represents the preset color threshold at the preset distance threshold, *P*_{*T*'}*(L*(*xᵢ, yᵢ*), *Iₐ*) represents the color deviation degree corresponding to the color cast value at the target distance, *T'*(*R',G',B'*) represents the color cast value, *L*(*xᵢ, yᵢ)* is the target distance, and *T*₂(*R*₂, *G*₂, *B*₂) represents the target color influence value of the video conference device on the target user.

According to formula (7), conversion can be performed to obtain formula (8). That is, when the target distance is greater than or equal to the preset distance threshold, since the image corresponding to the user has no obvious color cast, the color deviation degree can be determined to be 1; when the target distance is less than the preset distance threshold, since the image corresponding to the user has an obvious color cast, the color deviation degree can be determined based on the preset distance threshold, the preset color threshold corresponding to the preset distance threshold, the target distance, the color cast value corresponding to the target distance, and the target color influence value. Formula (8) is: $\begin{matrix}{P}_{T ′} \left(L\left({x}_{i ,}{y}_{i}\right),{I}_{a}\right) \\ \left\{\begin{matrix}\frac{{L}_{0}}{{T}_{0} \left({R}_{0}, {G}_{0}, {B}_{0}\right)} ∗ \frac{T ′ \left(R′,G′,B′\right) - {T}_{2} \left({R}_{2}, {G}_{2}, {B}_{2}\right)}{L \left({x}_{i}, {y}_{i}\right)} & L \left({x}_{i}, {y}_{i}\right) < {L}_{0} \\ 1 & L \left({x}_{i}, {y}_{i}\right) \geq {L}_{0}\end{matrix}\right.\end{matrix}$

Step 140: Determine a target corrected RGB value corresponding to the camera module based on the color deviation degree and the color cast value, where the target corrected RGB value is used for performing color compensation in case that the camera module collects statistics about automatic white balance (AWB) information.

In an embodiment, after the color deviation degree at the target distance is determined, the color cast value can be corrected based on the color deviation degree to obtain the corrected target corrected RGB value, to perform color compensation when the camera module collects statistics about AWB information, restoring the target image to normal and improving the overall image effect of the video conference device.

In an embodiment, determining the target corrected RGB value corresponding to the camera module based on the color deviation degree and the color cast value includes:
obtaining a standard color deviation corresponding to the camera module;
in case that the target distance is less than the preset distance threshold, determining the target corrected RGB value corresponding to the camera module based on the color cast value, the color deviation degree, and the standard color deviation; and
in case that the target distance is greater than or equal to the preset distance threshold, determining the color cast value as the target corrected RGB value corresponding to the camera module.

In an embodiment, after the color deviation degree is determined and the standard color deviation corresponding to the camera module is obtained, formula (9) is utilized. If the target distance is greater than or equal to the preset distance threshold, since the image corresponding to the user has no obvious color cast, the color cast value can be determined as the target corrected RGB value without performing color compensation; if the target distance is less than the preset distance threshold, since the image corresponding to the user has an obvious color cast, the color cast value can be corrected based on the color cast value, the color deviation degree, and the standard color deviation to obtain the corrected target corrected RGB value. When the camera module collects statistics about AWB information, the corresponding color value may be set to the target corrected RGB value to implement color compensation. Formula (9) is: ${T}_{3} \left({R}_{3}, {G}_{3}, {B}_{3}\right) = \left\{\begin{matrix}\frac{T ′ \left(R′,G′,B′\right)}{{P}_{T ′} \left(L\left({x}_{i}, {y}_{i}\right),{I}_{a}\right)} + e & L \left({x}_{i}, {y}_{i}\right) < {L}_{0} \\ T ′ \left(R′,G′,B′\right) & L \left({x}_{i}, {y}_{i}\right) \geq {L}_{0}\end{matrix}\right.$ where *T*₃(*R*₃, *G*₃,*B*₃) represents the corrected target corrected RGB value, *e* represents the standard color deviation corresponding to RGB values calculated by the camera module for m times, and $e = \frac{{\sum }_{j = 1}^{m} {\left(T{1}_{j}\left({R}_{j}, {G}_{j}, {B}_{j}\right)-\overline{T {1}_{j} \left({R}_{j}, {G}_{j}, {B}_{j}\right)}\right)}^{2}}{m}$, where *T*1*ⱼ*(*Rⱼ*, *Gⱼ*, *Bⱼ*) represents a color value calculated by the camera module at the j-th time, *T*1*ⱼ*(*Rⱼ*, *Gⱼ*, *Bⱼ*) represents a color mean value corresponding to the RGB values calculated by the camera module for m times, and $\overline{T {1}_{j} \left({R}_{j}, {G}_{j}, {B}_{j}\right)} = \frac{{\sum }_{j = 1}^{m} T {1}_{j} \left({R}_{j}, {G}_{j}, {B}_{j}\right)}{m}$.

It should be noted that, in addition to providing the compensation of the RGB value when the camera module collects statistics about the AWB information, color compensation may also be performed on an HSV mode of the camera module through a conversion relationship between the RGB value and the HSV mode, to correct the color cast value. Furthermore, after the color deviation degree corresponding to the color cast value at the target distance is determined, the operating current of the lamp beads may also be adjusted based on the color deviation degree, to adjust the first RGB value at the operating current of the lamp beads, and according to the first RGB value, adjust an influence of the backlight color of the video conference device at the operating current of the lamp beads on the collection of statistics of the AWB information by the camera module, implementing the color compensation for the target image.

According to the method for correcting color cast of a video conference device provided by the embodiment of the present application, after obtaining an operating current of lamp beads corresponding to a video conference device and a pixel size of at least one image, a target distance between a target user and the video conference device is determined based on each said pixel size; a color deviation degree at the target distance is determined in combination with the operating current of the lamp beads, the target distance, and a color cast value at the target distance; a target corrected RGB value is determined based on the color deviation degree and the color cast value when the camera module collects statistics about automatic white balance information. By comprehensively considering the target distance and the interference of a backlight color of the video conference device caused by the operating current of the lamp beads, adaptive compensation is performed on RGB values of the camera module, thereby improving the overall image effect of the video conference device.

The apparatus for correcting color cast of a video conference device according to an embodiment of the present application is be described below. The apparatus for correcting color cast of a video conference device described below may be corresponding to the method for storing audio data of multiple camera devices described above.

FIG. 4 is a schematic structural diagram of an apparatus for correcting color cast of a video conference device according to an embodiment of the present application. As shown in FIG. 4, the apparatus 400 includes an obtaining module 410, a first determining module 420, a second determining module 430, and a color cast correcting module 440;
where the obtaining module 410 is configured to obtain an operating current of lamp beads corresponding to the video conference device and a pixel size of at least one image;
the first determining module 420 is configured to determine a target distance between a target user and the video conference device based on each pixel size;
the second determining module 430 is configured to determine a color deviation degree corresponding to a color cast value at the target distance based on the operating current of the lamp beads, the target distance, and the color cast value at the target distance, where the color cast value is an RGB value corresponding to a camera module on the video conference device; and
the color cast correcting module 440 is configured to determine a target corrected RGB value corresponding to the camera module based on the color deviation degree and the color cast value, where the target corrected RGB value is used for performing color compensation in case that the camera module collects statistics about automatic white balance (AWB) information.

According to the apparatus for correcting color cast of a video conference device according to an embodiment of the present application, after obtaining an operating current of lamp beads corresponding to a video conference device and a pixel size of at least one image, a target distance between a target user and the video conference device is determined based on each said pixel size; a color deviation degree at the target distance is determined in combination with the operating current of the lamp beads, the target distance, and a color cast value at the target distance; a target corrected RGB value is determined based on the color deviation degree and the color cast value when the camera module collects statistics about automatic white balance information. By comprehensively considering the target distance and the interference of a backlight color of the video conference device caused by the operating current of the lamp beads, adaptive compensation is performed on RGB values of the camera module, thereby improving the overall image effect of the video conference device.

In an embodiment, the first determining module 420 is specifically configured to:
obtain a sensor pixel size corresponding to the camera module, a lens focal length, and center coordinates of each image in the video conference device;
for each pixel size, determine a first distance between a user corresponding to the pixel size and the camera module based on the sensor pixel size, the lens focal length, and the pixel size;
determine a third distance between the image and the camera module based on a second distance from the camera module to the video conference device and the center coordinates;
determine a fourth distance between the user and the video conference device based on the first distance and the third distance; and
determine the target distance between the target user and the video conference device based on each fourth distance.

In an embodiment, the first determining module 420 is specifically configured to:
in case that a quantity of the fourth distances is greater than 1, determine a user corresponding to a minimum fourth distance as the target user, and determining the minimum fourth distance as the target distance from the target user to the video conference device; and
in case that a quantity of the fourth distances is equal to 1, determine a user corresponding to the fourth distance as the target user, and determining the fourth distance as the target distance from the target user to the video conference device.

In an embodiment, the second determining module 430 is specifically configured to:
determine a first RGB value of the video conference device at the operating current of the lamp beads;
determine a target color influence value of the video conference device on the target user based on the first RGB value and the target distance; and
determine the color deviation degree corresponding to the color cast value at the target distance based on the target color influence value, the target distance, and the color cast value.

In an embodiment, the second determining module 430 is specifically configured to:
determine a target region of a target image corresponding to the target user in the video conference device;
determine a first color influence value of the video conference device on the target user in a horizontal direction based on the first RGB value, a first weight corresponding to the target region, and a second weight corresponding to other regions besides the target region in the video conference device, where the horizontal direction is a direction parallel to a display screen of the video conference device; and
determine the target color influence value of the video conference device on the target user based on a preset attenuation ratio, the target distance, and the first color influence value.

In an embodiment, the second determining module 430 is specifically configured to:
obtain a preset distance threshold and a preset color threshold corresponding to the camera module at the preset distance threshold;
in case that the target distance is less than the preset distance threshold, determine the color deviation degree corresponding to the color cast value at the target distance based on the preset distance threshold, the preset color threshold, the color cast value, the target distance, and the target color influence value; and
in case that the target distance is greater than or equal to the preset distance threshold, determine the color deviation degree corresponding to the color cast value at the target distance to be 1.

In an embodiment, the color cast correcting module 440 is specifically configured to:
obtain a standard color deviation corresponding to the camera module;
in case that the target distance is less than the preset distance threshold, determine the target corrected RGB value corresponding to the camera module based on the color cast value, the color deviation degree, and the standard color deviation; and
in case that the target distance is greater than or equal to the preset distance threshold, determine the color cast value as the target corrected RGB value corresponding to the camera module.

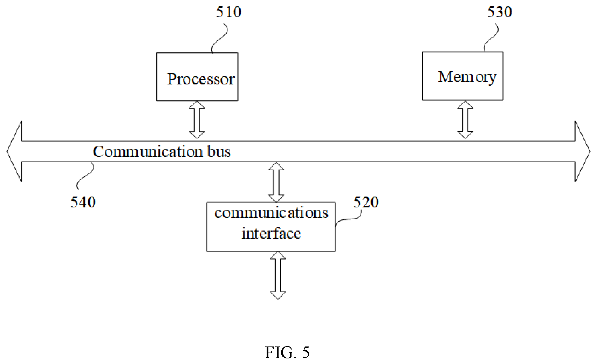

FIG. 5 is a schematic structural diagram of an electronic device according to an embodiment of the present application. As shown in FIG. 5, the electronic device may include: a processor 510, a communications interface 520, a memory 530, and a communication bus 540, where the processor 510, the communications interface 520, and the memory 530 communicate with each other through the communication bus 540. The processor 510 calls logical instructions in the memory 530 to execute the methods for correcting color cast of a video conference device, and the method includes:
obtaining an operating current of lamp beads corresponding to the video conference device and a pixel size of at least one image;
determining a target distance between a target user and the video conference device based on each pixel size;
determining a color deviation degree corresponding to a color cast value at the target distance based on the operating current of the lamp beads, the target distance, and the color cast value at the target distance, where the color cast value is an RGB value corresponding to a camera module on the video conference device; and
determining a target corrected RGB value corresponding to the camera module based on the color deviation degree and the color cast value, where the target corrected RGB value is used for performing color compensation in case that the camera module collects statistics about automatic white balance (AWB) information.

Furthermore, the logical instructions in the memory 530 may be implemented as software functional units and, when sold or used as independent products, may be stored in a computer-readable storage medium. Based on such understanding, the technical solution of the present application, in essence, or the part that contributes to the prior art, or a part of the technical solution, may be embodied in the form of a software product. The computer software product is stored in a storage medium and includes several instructions to cause a computer device (which may be a personal computer, server, or network device, etc.) to execute all or part of the steps of the methods described in each embodiment of the present application. The storage medium includes various media capable of storing program code, such as USB drives, portable hard drives, read-only memory (ROM), random access memory (RAM), magnetic disks, or optical disks.

A computer program product is also provided according to the present application, including a computer program, storing on a non-transient computer-readable storage medium. The computer is able to execute the methods for correcting color cast of a video conference device provided by each of the above methods when the computer program is executed by a processor. The method includes:
obtaining an operating current of lamp beads corresponding to the video conference device and a pixel size of at least one image;
determining a target distance between a target user and the video conference device based on each pixel size;
determining a color deviation degree corresponding to a color cast value at the target distance based on the operating current of the lamp beads, the target distance, and the color cast value at the target distance, where the color cast value is an RGB value corresponding to a camera module on the video conference device; and
determining a target corrected RGB value corresponding to the camera module based on the color deviation degree and the color cast value, where the target corrected RGB value is used for performing color compensation in case that the camera module collects statistics about automatic white balance (AWB) information.

A non-transient computer-readable storage medium is also provided according to the present application, storing a computer program, and the computer program implements any of methods for correcting color cast of a video conference device described above when executed by a processor. The method includes:
obtaining an operating current of lamp beads corresponding to the video conference device and a pixel size of at least one image;
determining a target distance between a target user and the video conference device based on each pixel size;
determining a color deviation degree corresponding to a color cast value at the target distance based on the operating current of the lamp beads, the target distance, and the color cast value at the target distance, where the color cast value is an RGB value corresponding to a camera module on the video conference device; and
determining a target corrected RGB value corresponding to the camera module based on the color deviation degree and the color cast value, where the target corrected RGB value is used for performing color compensation in case that the camera module collects statistics about automatic white balance (AWB) information.

The embodiments for apparatus described above are merely illustrative. The units described as separate components may or may not be physically separate, and the components shown as units may or may not be physical units, i.e., they may be located in one place or distributed across multiple network units. Some or all of the modules can be selected according to actual needs to achieve the purpose of this embodiment. Those skilled in the art can understand and implement this without any creative effort.

Through the description of the above embodiments, those skilled in the art can clearly understand that each embodiment may be implemented by means of software plus a required universal hardware platform, and of course, may also be implemented by means of hardware. Based on such understanding, the above technical solution essentially or a part contributing to the prior art may be embodied in the form of a software product, and the computer software product may be stored in a non-transient computer-readable storage medium, such as a ROM/RAM, a magnetic disk, an optical disk, etc. and includes several instructions for enabling a computer device (which may be a personal computer, a server, or a network device, etc.) to perform the method described in each embodiment or some parts of the embodiments

Finally, it should be noted that the above embodiments are only used to illustrate the technical solutions of the present application and are not limited thereto. Although the present application is described in detail with reference to the foregoing embodiments, those skilled in the art should understand that: modifications may still be made to the technical solutions described in each of the foregoing embodiments, or equivalent substitutions may be made to some of the technical features; and these modifications or substitutions do not cause the essence of the corresponding technical solutions to deviate from the scope of the technical solutions of each embodiment of the present application.

## Claims

1. A method for correcting color cast of a video conference device, comprising:
obtaining an operating current of lamp beads corresponding to the video conference device and a pixel size of at least one image;
determining a target distance between a target user and the video conference device based on each pixel size;
determining a color deviation degree corresponding to a color cast value at the target distance based on the operating current of the lamp beads, the target distance, and the color cast value at the target distance, wherein the color cast value is an RGB value corresponding to a camera module on the video conference device; and
determining a target corrected RGB value corresponding to the camera module based on the color deviation degree and the color cast value, wherein the target corrected RGB value is used for performing color compensation in case that the camera module collects statistics about automatic white balance (AWB) information.

2. The method of claim 1, wherein determining the color deviation degree based on the operating current of the lamp beads, the target distance, and the color cast value at the target distance comprises:
determining a first RGB value of the video conference device at the operating current of the lamp beads;
determining a target color influence value of the video conference device on the target user based on the first RGB value and the target distance; and
determining the color deviation degree corresponding to the color cast value at the target distance based on the target color influence value, the target distance, and the color cast value.

3. The method of claim 2, wherein determining the target color influence value of the video conference device on the target user based on the first RGB value and the target distance comprises:
determining a target region of a target image corresponding to the target user in the video conference device;
determining a first color influence value of the video conference device on the target user in a horizontal direction based on the first RGB value, a first weight corresponding to the target region, and a second weight corresponding to other regions besides the target region in the video conference device, wherein the horizontal direction is a direction parallel to a display screen of the video conference device; and
determining the target color influence value of the video conference device on the target user based on a preset attenuation ratio, the target distance, and the first color influence value.

4. The method of claim 2 or 3, wherein determining the color deviation degree corresponding to the color cast value at the target distance based on the target color influence value, the target distance, and the color cast value comprises:
obtaining a preset distance threshold and a preset color threshold corresponding to the camera module at the preset distance threshold;
in case that the target distance is less than the preset distance threshold, determining the color deviation degree corresponding to the color cast value at the target distance based on the preset distance threshold, the preset color threshold, the color cast value, the target distance, and the target color influence value; and
in case that the target distance is greater than or equal to the preset distance threshold, determining the color deviation degree corresponding to the color cast value at the target distance to be 1.

5. The method of claim 4, wherein determining the target corrected RGB value corresponding to the camera module based on the color deviation degree and the color cast value comprises:
obtaining a standard color deviation corresponding to the camera module;
in case that the target distance is less than the preset distance threshold, determining the target corrected RGB value corresponding to the camera module based on the color cast value, the color deviation degree, and the standard color deviation; and
in case that the target distance is greater than or equal to the preset distance threshold, determining the color cast value as the target corrected RGB value corresponding to the camera module.

6. The method of any of claims 1 to 3, wherein determining the target distance between the target user and the video conference device based on each pixel size comprises:
obtaining a sensor pixel size corresponding to the camera module, a lens focal length, and center coordinates of each image in the video conference device;
for each pixel size, determining a first distance between a user corresponding to the pixel size and the camera module based on the sensor pixel size, the lens focal length, and the pixel size;
determining a third distance between the image and the camera module based on a second distance from the camera module to the video conference device and the center coordinates;
determining a fourth distance between the user and the video conference device based on the first distance and the third distance; and
determining the target distance between the target user and the video conference device based on each fourth distance.

7. The method of claim 6, wherein determining the target distance between the target user and the video conference device based on each fourth distance comprises:
in case that a quantity of the fourth distances is greater than 1, determining a user corresponding to a minimum fourth distance as the target user, and determining the minimum fourth distance as the target distance from the target user to the video conference device; and
in case that a quantity of the fourth distances is equal to 1, determining a user corresponding to the fourth distance as the target user, and determining the fourth distance as the target distance from the target user to the video conference device.

8. An apparatus for correcting color cast of a video conference device, comprising:
an obtaining module, configured to obtain an operating current of lamp beads corresponding to the video conference device and a pixel size of at least one image;
a first determining module, configured to determine a target distance between a target user and the video conference device based on each pixel size;
a second determining module, configured to determine a color deviation degree corresponding to a color cast value at the target distance based on the operating current of the lamp beads, the target distance, and the color cast value at the target distance, wherein the color cast value is an RGB value corresponding to a camera module on the video conference device; and
a color cast correcting module, configured to determine a target corrected RGB value corresponding to the camera module based on the color deviation degree and the color cast value, wherein the target corrected RGB value is used for performing color compensation in case that the camera module collects statistics about automatic white balance (AWB) information.

9. An electronic device comprising a memory, a processor, and a computer program stored in the memory and executable in the processor, wherein the processor implements the methods for correcting color cast of a video conference device of any of claims 1 to 7 when executing the computer program.

10. A computer-readable storage medium storing a computer program, wherein the computer program implements the method for correcting color cast of a video conference device of any of claims 1 to 7 when executed by a processor.
